# FASCICULE DE BREVET EUROPEEN

(11) **EP 3 122 439 B1**
(45) Date de publication et mention de la délivrance du brevet: **08.07.2020**
(21) Numéro de dépôt: 15709721.3
(22) Date de dépôt: 19.02.2015
(51) Int. Cl.: B01D 53/04, B01J 19/02, B01D 53/047

(54) **INSTALLATION ET PROCEDE DE PURIFICATION PAR ADSORPTION D'UN FLUX GAZEUX COMPRENANT UNE IMPURETE CORROSIVE**
ANLAGE UND VERFAHREN ZUR REINIGUNG DURCH ADSORPTION EINES GASFÖRMIGEN STROMS MIT EINER KORROSIVEN VERUNREINIGUNG
FACILITY AND METHOD FOR PURIFICATION BY ADSORPTION OF A GASEOUS FLOW COMPRISING A CORROSIVE IMPURITY

(30) Priorité: 28.03.2014 FR 1452705
(43) Date de publication de la demande: 01.02.2017
(73) Titulaire: L'Air Liquide Société Anonyme pour l'Etude et l'Exploitation des Procédés Georges Claude, 75007 Paris (FR)
(72) Inventeur: GESBERT, Thierry, 91370 Verrieres le Buisson (FR); MONEREAU, Christian, 34000 Montpellier (FR); RENOU, Elise, 75015 Paris (FR); BONAY, Romain, 94170 Le Perreux sur Marne (FR)
(74) Mandataire: Laigneau, Amandine
(86) Numéro de dépôt international: PCT/FR2015/050403
(87) Numéro de publication internationale: WO 2015/145001

(56) Documents cités:
- WO-A2-2010/001038
- DE-A1- 3 342 447
- FR-A1- 2 937 257
- FR-A1- 2 962 663
- GB-A- 2 189 409
- US-A- 3 162 516
- US-A1- 2003 205 130
- US-A1- 2012 079 938

## Description

La présente invention est relative à une installation de purification par adsorption d'un flux gazeux comprenant au moins une impureté corrosive vis-à-vis de l'acier carbone.

L'adsorption est largement utilisée pour purifier ou séparer les gaz. On peut citer la séparation de n et iso paraffines, la séparation des xylènes, d'alcools, la production d'azote ou d'oxygène à partir d'air atmosphérique, le déballastage en CO2 de gaz de combustion, de gaz de hauts fourneaux, etc. Côté épuration, on trouve les sécheurs, la purification d'hydrogène ou d'hélium, la purification de gaz riches en méthane, l'adsorption d'impuretés en traces dans de nombreux fluides (arrêt de mercure, NOx, produits soufrés...).

Les procédés mettant en œuvre l'adsorption sont de plusieurs types selon que l'adsorbant est régénérable ou pas in situ. On parle donc d'adsorption "à charge perdue" c'est-à-dire à renouveler quand le produit est saturé en impuretés (on utilise aussi dans ce cas le terme de "lit de garde" pour qualifier une telle épuration) ou de cycles d'adsorption dans l'autre cas.

Les cycles d'adsorption diffèrent en premier lieu par la façon dont l'adsorbant est régénéré. Si la régénération se fait essentiellement par augmentation de la température, il s'agit d'un procédé TSA (Température Swing Adsorption = adsorption avec variation de température). Si par contre, la régénération s'effectue par baisse de la pression, il s'agit d'un procédé PSA (Pressure Swing Adsorption = adsorption à pression modulée). Par procédé PSA, on entend : les procédés PSA proprement dits, c'est-à-dire avec la phase d'adsorption qui s'effectue à une pression sensiblement plus élevée que la pression atmosphérique, et la phase de régénération qui s'effectue à une pression un peu supérieure à la pression atmosphérique; les procédés VSA (Vacuum Swing Adsorption = adsorption à pression modulée avec mise sous vide) pour lesquels la phase d'adsorption s'effectue à une pression de l'ordre de la pression atmosphérique et la régénération sous vide,; les procédés VPSA et analogues (MPSA, MSA...) avec une phase d'adsorption s'effectuant sous quelques bars et la régénération sous vide. On rattache également à cette catégorie les systèmes qui sont régénérés par balayage avec un gaz de purge (ou d'élution), gaz qui peut être extérieur au procédé lui-même. Dans ce cas, on baisse en effet la pression partielle des impuretés, ce qui permet leur désorption.

L'adsorbant est mis en œuvre dans des réacteurs que l'on appellera par la suite adsorbeurs. Ces adsorbeurs sont eux aussi de différents types selon leur géométrie. L'adsorbeur le plus simple est de forme cylindrique à axe vertical. Lorsque les débits à épurer deviennent importants, on peut utiliser des adsorbeurs cylindriques à axe horizontal. Au delà d'un certain débit et/ou si on recherche de faibles pertes de charge et/ou si la vitesse du gaz peut être supérieure à la vitesse d'attrition (de mise en mouvement des billes) au moins dans certaines étapes du cycle, il devient intéressant d'utiliser un adsorbeur radial.

Par exemple, dès lors que les débits à purifier atteignent quelques dizaines de milliers de mètres cube réels (c'est-à-dire comptés dans les conditions opératoires) par heure, il est effectivement connu d'utiliser des adsorbeurs radiaux tel qu'il est enseigné dans les documents US-A-4541851, DE-A1-3342447 ou dans le document EP 1 638 669.

Les adsorbeurs radiaux permettent en effet de réaliser de façon fiable l'épuration ou la séparation de grandes quantités de fluide en permettant, du fait de leur géométrie, une grande liberté de choix pour les vitesses de circulation desdits fluides, en particulier pour les rendre compatibles avec les propriétés mécaniques des particules d'adsorbant utilisées, tout en assurant une bonne distribution gazeuse à travers les masses adsorbantes. Cette flexibilité provient du fait que la section de passage du gaz est fonction du diamètre et de la hauteur des grilles et non pas du seul diamètre comme pour un adsorbeur standard. Ils sont donc notamment utilisés pour le séchage et la décarbonatation d'air avant son fractionnement par voie cryogénique, dans le cas des VSA Oxygène et sont particulièrement bien adaptés aux VSA ou PSA CO2, unités devant traiter des débits très élevés (plusieurs centaines de milliers de Nm3/h) en basse (1 à 3 bar abs), moyenne (inférieure ou égale à 15 bar abs) ou même relativement haute (supérieure à 15 bar abs) pression, avec régénération sous vide, à pression atmosphérique ou sous pression. Les pressions d'adsorption et de régénération sont choisies en fonction du procédé global.

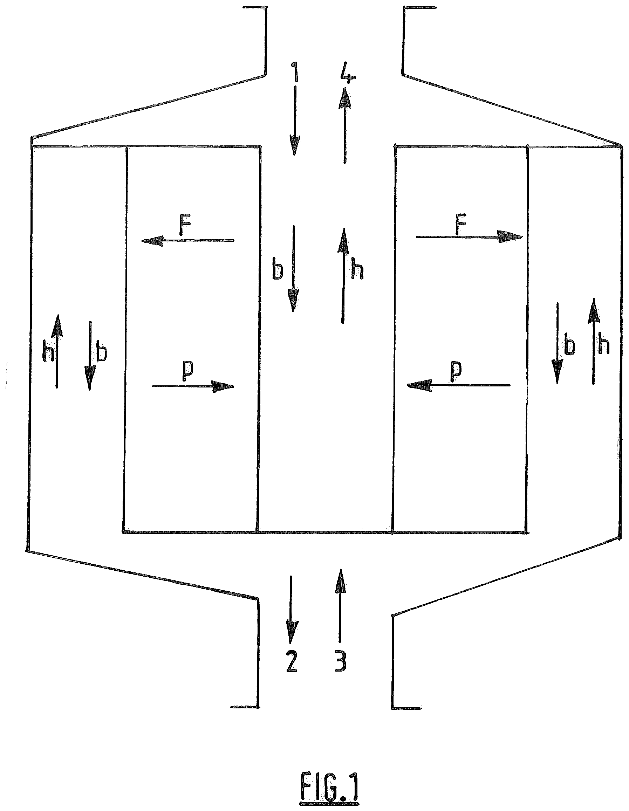

Il existe de nombreuses configurations pour l'utilisation des adsorbeurs radiaux. En se référant à la Figure 1 et en prenant comme référence la phase d'adsorption, le gaz peut circuler de l'intérieur vers l'extérieur (circulation centrifuge F) ou de l'extérieur vers l'intérieur (circulation centripète P). Le gaz peut entrer par le bas 3 ou par le haut 1 et sortir de même par le bas 2 ou par le haut 4. Suivant les cas le gaz va cheminer de haut en bas (b) ou de bas en haut (h) dans la partie centrale ou à la périphérie. En se référant à la Figure 1, on peut donc avoir des circulations centrifuges en adsorption du type par exemple (sens successifs : 1-b-F-b-2] avec entrée par le haut et sortie par le bas ou bien (sens successifs : 1-b-F-h-4), les entrée et sortie se faisant alors en partie supérieure par des tubulures distinctes. La régénération peut se faire dans le même sens que l'adsorption (régénération co-courant) ou plus généralement en sens inverse (régénération à contre-courant). D'autres configurations plus complexes ont été utilisées. Un autre arrangement possible consiste par exemple à rajouter un disque circulaire d'étanchéité pour fractionner en 2 parties la masse adsorbante. Il est alors possible dans un même adsorbeur radial d'avoir en phase d'adsorption par exemple une circulation centrifuge dans un premier volume d'adsorbant suivie d'une circulation centripète dans le volume supérieur d'adsorbant, soit par exemple pour une entrée en partie inférieure et une sortie par le haut [sens successifs : 3-h-F-h-P-h-4).

Il est connu que l'air atmosphérique contient des composés devant être éliminés avant l'introduction dudit air dans les échangeurs thermiques de la boîte froide d'une unité de séparation d'air, notamment les composés dioxyde de carbone (CO2), vapeur d'eau (H2O), oxydes d'azote et/ou hydrocarbures par exemple. En effet, en l'absence d'un tel prétraitement de l'air pour en éliminer ses impuretés CO2 et eau, on assiste à une solidification en glace de ces impuretés lors du refroidissement de l'air à température cryogénique typiquement inférieure ou égale à -150°C, d'où il peut résulter des problèmes de colmatage de l'équipement, notamment des échangeurs thermiques, des colonnes de distillation...

En outre, il est également d'usage d'éliminer au moins partiellement les impuretés hydrocarbures et oxydes d'azote susceptibles d'être présentes dans l'air afin d'éviter leur trop forte concentration dans le bas de la ou des colonnes de distillation, et par là tout risque de dégradation des équipements.

Classiquement, un cycle de procédé TSA de purification d'air comporte les étapes suivantes:
a) purification de l'air par adsorption des impuretés à pression super-atmosphérique et à température ambiante ;
b) dépressurisation de l'adsorbeur jusqu'à la pression atmosphérique ;
c) régénération de l'adsorbant à pression atmosphérique, notamment par les gaz résiduaires, typiquement de l'azote impur provenant d'une unité de séparation d'air et réchauffé jusqu'à une température habituellement entre 100 et 280°C au moyen d'un ou plusieurs échangeurs thermiques ;
d) refroidissement à température ambiante de l'adsorbant, notamment en continuant à y introduire ledit gaz résiduaire issu de l'unité de séparation d'air, mais non réchauffé ;
e) repressurisation de l'adsorbeur avec de l'air purifié issu, par exemple, d'un autre adsorbeur se trouvant en phase de production ou éventuellement avec l'air à épurer.
Généralement, les dispositifs de prétraitement d'air comprennent deux adsorbeurs, fonctionnant de manière alternée, c'est-à-dire que l'un des adsorbeurs est en phase de production, pendant que l'autre est en phase de régénération. La phase de production correspond à la purification du mélange gazeux par adsorption des impuretés. La phase de régénération comprend les étapes de dépressurisation, chauffage, refroidissement et repressurisation citées ci-dessus.

Une étape de mise en parallèle des deux adsorbeurs, de durée plus ou moins longue, c'est-à-dire de quelques secondes à plusieurs minutes, est généralement rajoutée au début ou en fin de phase de régénération.

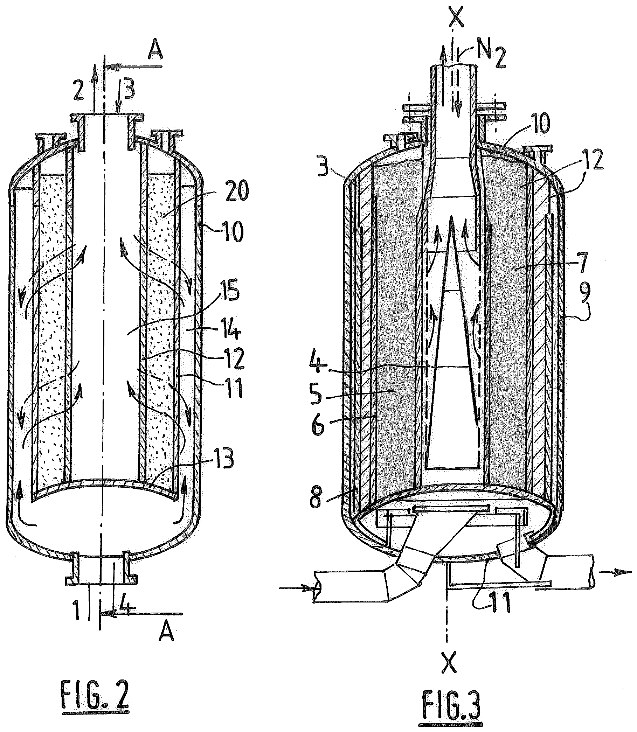

Le fonctionnement d'un adsorbeur radial pour une telle application est représenté figure 2. Le fluide à épurer ou à séparer 1 rentre en partie basse de l'adsorbeur radial 10, traverse la masse adsorbante 20 et le fluide purifié sort en partie supérieure 2. Lors de la régénération, le fluide de régénération 3 rentre à contre-courant par la partie haute, désorbe les impuretés contenues dans la masse adsorbante 20 et le gaz résiduaire 4 sort en partie basse.
L'adsorbeur lui-même 10 est constitué d'une virole cylindrique d'axe vertical AA et de 2 fonds. La masse adsorbante est maintenue en place au moyen d'une grille externe perforée 11 et d'une grille interne également perforée 12 fixées d'un côté sur le fond supérieur et de l'autre côté, sur une tôle pleine 13 en partie inférieure. Le fluide à épurer ou à séparer 1 circule verticalement à la périphérie dans la zone libre externe 14 entre la virole cylindrique et la grille externe, traverse radialement la masse adsorbante 20 puis circule verticalement dans la zone libre interne 15 avant de quitter l'adsorbeur par le haut. La régénération s'effectue en sens inverse.
En pratique, le matériau adsorbant peut être constitué d'un seul et même adsorbant, par exemple de la zéolite X ou de l'alumine activée dopée, ou comprendre plusieurs lits.
Parmi les lits multiples, on peut citer les couples alumine activée / zéolite X, silica gel / zéolite X, zéolite X / zéolite échangée). Il peut être aussi intéressant d'utiliser des multicouches du type : gel de silice résistant à l'eau, gel de silice standard ou alumine activée, zéolite X ou du type : gel de silice ou alumine activée, zéolite X, zéolite échangée.

La figure 3 représente un adsorbeur radial comportant 2 couches distinctes d'adsorbants. Cet adsorbeur comporte également d'autres équipements internes (filtre, cône de distribution...) dont il sera question par la suite.
Dans la figure 3, on observe : 3 grilles perforées 5, 6, 7, leur base inférieure 8, les pièces de raccordements entre les grilles et un fond 12, les 2 fonds 10 et 11 et la virole extérieure 9. Ce système permet de maintenir en place les adsorbants constituant les lits de forme annulaire 3 et 4.

Les pièces de raccordement 12 peuvent être de forme et de dimensions différentes suivant la technologie exacte retenue pour les adsorbeurs. Elles peuvent par exemple comprendre des trappes démontables pour accéder à des espaces inter-grilles ou à l'espace entre grille externe et virole. Dans d'autres conceptions, ce ne sont que des pièces permettant la fixation des grilles avec leurs extrémités. Elles sont généralement conçues pour éviter les cheminements préférentiels du gaz en partie supérieure. Elles assurent évidement une parfaite étanchéité entre les volumes gazeux interne et externe pour éviter tout by-pass (entrée/sortie) qui rendrait inopérant le procédé d'épuration.
D'autres éléments, comme par exemple un filtre dans l'espace cylindrique central, une pièce de raccordement entre la bride et ledit filtre, un cône de distribution interne au filtre, peuvent compléter l'adsorbeur.

Le sens de circulation du gaz en phase d'adsorption et de régénération (centrifuge ou centripète) n'est pas laissé au hasard mais dépend de contraintes de procédés ou de contraintes technologiques.
Dans un PSA où le débit va en décroissant de l'entrée à la sortie, on choisit généralement le sens centripète pour l'adsorption. Les sections de passage allant dans ce cas en décroissant, de la grille externe à la grille interne, ceci permet de maintenir la vitesse de circulation du gaz et par là de limiter la résistance au transfert de matière dans le film fluide entourant les particules d'adsorbant, qui pourrait dans le cas contraire devenir prépondérante et modifier la cinétique. De plus, l'étape d'élution se faisant en sens inverse, cela permet aussi d'avoir les plus grosses sections de passage à l'extrémité où le débit sortant est le plus élevé et de minimiser la perte de charge pendant cette étape cruciale sur le plan des performances.
Il est des cas cependant où il convient d'adopter la solution de circulation centrifuge. Dans le cas de multi-lits, il se trouve que souvent la première couche d'adsorbant joue un rôle de lit de garde vis-à-vis d'une impureté présente en faible concentration dans le gaz d'alimentation et que le volume de cette couche est faible par rapport au volume total d'adsorbant. Un ordre de grandeur typique est 5 à 10%. Située à la périphérie de l'adsorbeur, cette couche pourrait ne représenter que quelques centimètres sur la largeur du lit. Technologiquement, il devient difficile de réaliser un adsorbeur avec des grilles très peu espacées (problèmes d'enfilage, de tolérances de construction, notamment). Dans ce cas, on préfère souvent disposer cette première couche côté intérieur, où l'épaisseur, par simple géométrie, peut être par exemple 3 fois supérieure pour le même volume. La très grande majorité des TSA ont une adsorption centripète pour des raisons de coût et/ou de consommation énergétique. On doit d'abord noter que pour la grande majorité des procédés TSA, l'impureté ou les impuretés à arrêter sont soit sous forme de traces, soit de toute façon très minoritaires dans le gaz d'alimentation. C'est le cas cité plus haut des épurations d'air, mais aussi des séchages et purifications de gaz comme le syngas avant la séparation cryogénique hydrogène / monoxyde de carbone, le gaz naturel, l'arrêt des composés organiques volatils, etc. Le débit de gaz d'alimentation entre l'entrée et la sortie varie peu et n'est pas un critère pour le choix du sens de circulation.

Une fois saturé, l'adsorbant est régénéré par circulation d'un gaz à température élevée, généralement entre 100 et 280°C. Dans un souci d'optimisation, lors de la phase de chauffage, il est courant de n'introduire que la quantité de chaleur nécessaire, ce qui fait qu'en sortie le gaz ne sort jamais avec une température très élevée. Pour une température de régénération de 150°C, la température de pic, c'est-à-dire maximale en sortie pourra être de 50 à 60°C par exemple. Afin d'éviter d'avoir à chauffer la virole extérieure par le gaz de régénération, ce qui impliquerait à la fois une perte énergétique et la nécessité d'investir dans une isolation, il est courant de faire entrer le gaz de régénération dans la partie centrale de l'adsorbeur radial. Il n'y a ainsi pas de perte thermique vers le milieu extérieur et la virole externe qui ne voit qu'une température modérée, n'a pas besoin d'avoir une isolation thermique. La régénération s'effectue donc classiquement de façon centrifuge et l'adsorption qui est en sens opposé est donc centripète : l'air atmosphérique est introduit par un fond, circule à la périphérie entre virole et grille externe, traverse radialement la masse adsorbante, est recueilli, sec et décarbonaté, au centre et évacué par un des fonds.

Les adsorbeurs radiaux sont très généralement en acier carbone pour des raisons de coût bien qu'il soit connu que l'acier carbone est modérément résistant à la corrosion malgré la couche protectrice qu'il développe naturellement à sa surface et que l'air atmosphérique présente une tendance à corroder en particulier à cause de son humidité et de la présence de gaz carbonique. Cependant, la corrosion liée aux impuretés habituelles de l'air atmosphérique et aux conditions de fonctionnement de ces adsorbeurs est suffisamment faible pour qu'une surépaisseur de corrosion de quelques millimètres (2 à 3 généralement) soit suffisante pour s'assurer de conserver l'épaisseur minimale nécessaire à la tenue mécanique durant des périodes largement supérieures à 10 ans.

Il y a cependant des sites industriels où l'air est plus pollué que la normale ou des localisations, comme en façade maritime par exemple ou sur des barges en mer, sur des champs de gaz ou de pétrole, pour lesquels une simple surépaisseur de corrosion pourrait être rapidement insuffisante. Certains constituants sont susceptibles non seulement de corroder rapidement l'acier carbone mais également d'attaquer chimiquement certains adsorbants et de les détruire.
Une solution consiste alors à mettre à l'amont du procédé TSA de purification d'air, appelé FEP, un prétraitement. Dans une usine chimique où l'air pourrait contenir périodiquement par exemple des traces d'HCl, il pourra être installé un "filtre" en basse pression, à l'aspiration du compresseur d'air par exemple. Cet équipement sera par exemple un adsorbeur, lui aussi de type radial, contenant une charge perdue d'un constituant arrêtant les traces d'HCl. Un lit de zéolite 13X ou d'alumine activée fait généralement l'affaire. Des produits plus spécifiques pourront cependant être utilisés si nécessaire. La charge est renouvelée périodiquement, tous les 6 mois par exemple. Dans un certain nombre de cas, un simple filtre n'est pas suffisant car les espèces corrosives peuvent être de plusieurs types et/ou en quantité trop élevée pour ce genre de solutions.
Sans vouloir entrer ici dans les détails, il est connu que de nombreux constituants tels les ions chlore, fluor, SO42-, NO3- ou les composés caustiques, peuvent détruire localement la protection naturelle développée par l'acier carbone et attaquer le métal en profondeur. L'oxygène et l'eau présents dans l'air sont un élément aggravant. Les conditions de fonctionnement de l'équipement (température, présence d'eau liquide lors de la régénération,...) jouent également un rôle accélérateur de la corrosion. Ces conditions défavorables se trouvent réunies sur certains sites, en particulier là où l'on traite certains minerais (cuivre en particulier).
L'air est alors lavé à travers des colonnes, souvent à garnissage pour limiter les pertes de charge. Des additifs sont ajoutés à l'eau suivant la nature des impuretés à enlever. Le dernier lavage s'effectue généralement avec de l'eau pour éviter tout entraînement de produits chimiques vers les équipements aval, en particulier la FEP. Celle-ci fait alors l'objet d'un design standard.
Si cette solution a fait la preuve de son efficacité, il n'en demeure pas moins qu'elle a au moins trois inconvénients : son coût (colonnes de gros diamètre, coût des additifs), la consommation énergétique (moyen de pompage des eaux de lavage, perte de charge sur l'air à basse pression) et la pollution d'une grande quantité d'eau (avec les impuretés ou produits chimiques formés très dilués). Les normes anti-pollution de plus en plus strictes obligent à traiter ces eaux de lavage avant tout rejet, ce qui demande des installations de grande dimension, coûteuses en investissement (bassin, stockage) et en opération (produits chimiques, pompage, analyses). Partant de là, un problème qui se pose est de trouver un nouveau moyen de gérer ces problèmes d'impuretés.

Une solution de la présente invention est une installation de purification par adsorption d'un flux gazeux comprenant au moins une impureté corrosive vis-à-vis de l'acier carbone, comprenant un adsorbeur radial comprenant entre autres :
- une virole avec une enveloppe externe en acier carbone ;
- une grille interne verticale et perforée en matériau résistant à la corrosion ;
- une grille externe verticale et perforée ;
- un adsorbant maintenu verticalement par la grille externe et la grille interne permettant d'arrêter au moins partiellement ladite impureté corrosive ; et
- des moyens permettant une circulation centrifuge du flux gazeux.

On entend par :
- « matériau résistant à la corrosion » : un matériau non corrodable, c'est à dire insensible physiquement ou chimiquement aux composés en contact, ou présentant une vitesse de corrosion suffisamment faible pour qu'une surépaisseur de corrosion standard, généralement de 1 à 5 mm, permette une durée de vie de l'équipement supérieure à 10 ans, plus généralement compatible avec la durée de vie prévue pour l'unité. Dans le contexte de la présente invention, cela signifie en particulier qu'il ne s'agit pas d'acier carbone ordinaire, sans traitement de surface particulier ;
- « grille perforée » : un système perméable au gaz, imperméable aux particules d'adsorbants et présentant les caractéristiques mécaniques suffisantes pour assurer un fonctionnement de l'installation de purification fiable pendant plusieurs années ; autrement dit la grille va tenir dans le temps et maintenir les adsorbants en place ;
- « grille interne » : la grille la plus proche de l'axe central ; et
- « grille externe » : la grille la plus proche de la paroi extérieure de l'adsorbeur.

Une grille perforée peut-être composée de plusieurs éléments, par exemple une grille d'épaisseur 6 ou 8 mm avec de larges ouvertures sur laquelle est plaqué un tissu métallique d'ouverture inférieure au mm.

De manière générale pour un adsorbeur radial, en fonction du nombre d'adsorbants différents utilisés, on rajoute des grilles intermédiaires. En pratique, si N est le nombre de couches d'adsorbants, on doit utiliser N-1 grilles intermédiaires, soit en tout N+1 grilles.
Comme exemple de moyens de circulation centrifuge du flux gazeux on peut citer la tubulure d'entrée dans l'adsorbeur, le volume vide central, le système central éventuel de distribution de gaz, l'interparoi entre la virole et la grille externe, la tubulure de sortie dans un fond, le déflecteur et les filtres éventuels, auxquels on peut associer les vannes et les différentes tuyauteries.

L'installation selon l'invention présente les caractéristiques suivantes :
- ladite installation est de type TSA et comprend des moyens pour faire circuler le gaz de régénération de manière centripète. Ainsi, le gaz de régénération chargé des impuretés sortira il par le centre de l'adsorbeur qui est prévu pour de telles conditions agressives (conditions acides) ;
- les équipements de l'installation en contact avec le gaz de régénération en sortie d'adsorbeur sont en matériau résistant à la corrosion ;
- ladite installation est de type PSA et comprend des moyens pour faire circuler le gaz résiduaire de manière centripète ;
- les équipements de l'installation en contact avec le gaz résiduaire sont optionnellement en matériau résistant à la corrosion. Sans vouloir rentrer dans le détail des cycles PSA largement décrits dans la littérature, le gaz résiduaire est extrait à contre-courant du gaz d'alimentation au cours d'étapes communément appelées "décompression finale à contre-courant" (ou Blow Down) et "élution" (ou Purge). Ce gaz résiduaire est extrait à pression plus basse que la pression d'adsorption et contient les constituants les plus fortement adsorbables. On notera que ce gaz résiduaire peut constituer la fraction que l'on cherche à produire. On l'appellera ici néanmoins gaz résiduaire dans tous les cas ;
- le matériau résistant à la corrosion peut être choisi parmi les aciers inoxydables, les métaux nobles, les polymères, les céramiques et l'acier carbone recouvert d'un matériau anticorrosion. Par matériau anticorrosion, on entend peinture, galvanisation, électro-zincage, plaquage acier inoxydable, dépôt téflon, notamment.
- la grille externe est en acier carbone. Notons que dans le cas où plusieurs adsorbants seraient utilisés, les grilles intermédiaires sont en acier carbone ;
- au moins un fond de l'adsorbeur peut être en acier carbone, de préférence les 2 fonds de l'adsorbeur sont en acier carbone. Cela suppose qu'ils ne soient pas en contact avec les impuretés corrosives. Ceci est généralement possible comme représenté sur la Figure 3 où les fonds 10 et 11 ne voient pas le gaz à traiter, ni le gaz de régénération en sortie. Cela s'applique aux TSA (objet de la description) mais aussi aux PSA ou aux lits de garde ;
- l'adsorbant maintenu verticalement repose sur un support présentant une pente dirigée vers l'axe central de l'adsorbeur. Le support inférieur de la couche adsorbante est généralement plat pour une distribution régulière des flux gazeux à travers l'adsorbant. Néanmoins, ce support est parfois bombé pour une meilleure tenue mécanique. C'est le cas par exemple sur les Figures 2 et 3. Pour une installation selon l'invention, la partie interne de ce support inférieur a une pente dirigée vers le centre (à l'inverse du support des Figures 2 et 3) afin de faciliter l'écoulement gravitaire des liquides éventuellement formés au cours du cycle vers la partie interne de l'adsorbeur, puis de là, vers le point bas de l'installation d'où ils seront préférentiellement évacués via une purge. Il peut s'agir d'un fond bombé, mais installé en sens "inverse" de celui représenté sur les Figures 2 et 3 ;
- ladite installation comprend au moins un moyen de recueillir et d'extraire des liquides de l'adsorbeur provenant du flux gazeux à purifier et/ou formés pendant la régénération. Ces liquides pourront être extraits de l'installation par une vanne ouvrant sur un circuit de purge avec ladite vanne préférentiellement automatisée et liée au cycle d'adsorption ;
- l'adsorbant maintenu verticalement peut être choisi parmi le gel de silice, le verre poreux, les résines, la silicalite, le charbon actif et la zéolite 3A ;
Certains adsorbants peuvent être également attaqués chimiquement par les impuretés corrosives pour l'acier carbone. Pour éviter d'avoir à changer trop rapidement les adsorbants ou au moins celui de la première couche, il convient de retenir des adsorbants également résistants à ces impuretés, même s'ils sont moins efficaces en tant qu'adsorbants. Parmi eux, on peut citer les adsorbants que l'on vient de mentionner c'est-à-dire le verre microporeux, la zéolite 3A (qui va adsorber sélectivement l'eau), certains gels de silice, les silicalites. Le charbon actif présente également une bonne résistance aux acides. On peut également citer comme adsorbants particulièrement résistants, les macromolécules insolubles de type polymère, par exemple à base de polystyrène ou de polyacrylate réticulés, comportant des macro et/ou microporosités de dimension leur permettant d'adsorber et/ou condenser l'humidité du gaz à traiter. Parmi elles, les diverses résines échangeuses d'ions peuvent constituer un adsorbant relativement bon marché pour effectuer au moins une première partie du séchage.

Notons qu'outre la grille interne qui maintient en place la masse adsorbante, la partie centrale peut comprendre, comme décrit précédemment, un filtre et/ou un distributeur de gaz, par exemple un tube perforé ou un cône, ainsi que des pièces de raccordement entre la bride entrée/sortie et ces éléments. Ces éléments sont préférentiellement en matériau résistant à la corrosion. On notera cependant que certains de ces équipements peuvent être changés relativement facilement et qu'il est possible de les considérer comme des pièces à remplacer périodiquement que l'on réalisera en acier carbone. Il s'agit là d'un choix économique à faire en fonction de paramètres variés (coûts respectifs des matériaux, durée de vie, politique de maintenance).

L'invention a également pour objet un procédé de purification d'un flux gazeux comprenant au moins une impureté corrosive vis-à-vis de l'acier carbone, mettant en œuvre une installation selon l'invention et dans lequel l'impureté corrosive est choisie :
- dans le groupe des acides : HCl, HNO3, HF, et H2S04 ; ou
- dans le groupe des gaz : NOx, SOx et H2S en présence d'humidité.
De préférence le flux gazeux est un flux gazeux issu de combustion, de préférence d'oxy-combustion, ou issu de la métallurgie, de préférence des gaz de hauts fourneaux.
Notons que le procédé selon l'invention peut être un procédé de séchage ou de déballastage en CO2.

Selon un cas particulier l'invention concerne un procédé de purification d'un flux gazeux comprenant au moins une impureté corrosive vis-à-vis de l'acier carbone, mettant en œuvre une installation selon l'invention comprenant au moins un moyen de recueillir et d'extraire des liquides de l'adsorbeur provenant du flux gazeux à purifier et/ou formés pendant la régénération et dans lequel l'impureté corrosive est choisie :
- dans le groupe des acides : HCl, HNO3, HF, et H2S04 ; ou
- dans le groupe des gaz : NOx, SOx et H2S en présence d'humidité ;
et les liquides extraits de l'adsorbeur sont recyclés dans des procédés de lavage à l'eau acide ou de production d'acide.

L'invention va être à présent décrite en détail dans le cadre d'un procédé de capture du CO2. On rappelle qu'afin de réduire les émissions de CO2 d'origine humaine dans l'atmosphère, il s'agit d'extraire le CO2 d'un gaz généré par un procédé industriel, éventuellement de le purifier et enfin, en général, de le comprimer afin de le transporter dans un pipeline. Ce traitement nécessite généralement de sécher au moins partiellement le CO2.

Les gaz issus de procédés de type Oxycombustion sont de bons candidats car ils ont une teneur en CO2 élevée, l'azote ayant été éliminé de l'air avant combustion. Ces gaz contiennent également un pourcentage de NOx (NO & NO2 majoritairement) issus de la combustion. Ces NOx vont entrer dans les adsorbeurs visant à sécher le CO2 sous la forme de NO, NO2 et aussi sous forme d'acide nitrique (HNO3) issu de la transformation de NO en NO2 et de NO2 en HNO3, en particulier si l'épuration a lieu après compression et refroidissement. HNO3 est retenu par l'adsorbant des adsorbeurs et NO et NO2 sont retenus partiellement. Dans l'adsorbeur, les réactions de conversion de NO en NO2 et de NO2 en HNO3 sont accélérées et les équilibres sont déplacés vers la formation de HNO3. Au moment de la régénération de l'adsorbant, lors de la désorption des NOx préalablement adsorbés, il y a également possibilité de former de l'acide nitrique en présence de l'eau piégée lors de l'adsorption. L'acide nitrique chaud formé et/ou désorbé pendant la régénération ainsi que la vapeur d'eau désorbée vont avoir tendance à se condenser sur les zones les plus froides situées vers la sortie de l'adsorbeur. Les condensats formés vont alors contenir une forte concentration en acide nitrique.

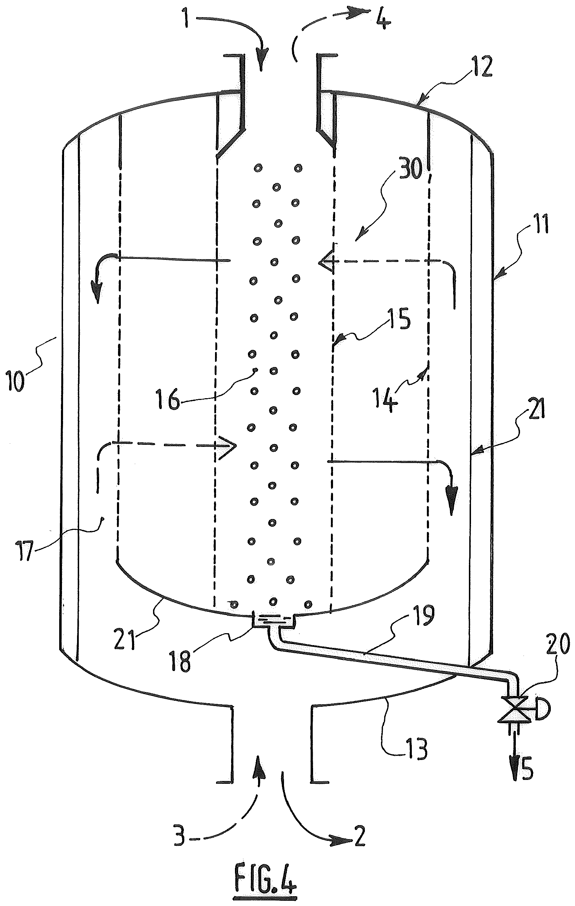

On se réfère à présent à la Figure 4 qui représente un adsorbeur radial 10 selon l'invention. Les dimensions de cet adsorbeur vont dépendre du débit de gaz à sécher et des conditions opératoires. De façon générale le diamètre de la virole varie de 2 mètres à 6 mètres et sa hauteur de 4 à plus de 20 mètres. Le gaz d'oxycombustion 1 à sécher est introduit en partie supérieure, est réparti au moyen du distributeur 16 à travers la masse adsorbante 30, qui est ici un lit unique de gel de silice. Ce lit est maintenu en place par les grilles 14 et 15 auxquelles est fixé le fond 21. Le gaz séché 2 circule dans l'interparoi 17 puis sort par la partie inférieure de l'adsorbeur. Le gaz de régénération 3 est introduit à contre-courant d'abord chaud (étape de chauffage) puis à température ambiante (étape de refroidissement). Il sort de l'adsorbeur par le centre et le fond supérieur 4. La régénération s'effectuant à 200°C, une isolation par simple lame de gaz 21 a été prévue. Le gaz contenu dans cette lame est en équipression avec le gaz circulant dans l'interparoi. La liaison entre les 2 volumes gazeux est ici prévue en partie supérieure pour limiter les phénomènes de convection mais d'autres localisations sont possibles suivant le critère retenu.
Les liquides formés sont recueillis par gravité dans le volume 18 situé en point bas du fond support 21. Ces liquides peuvent provenir de gouttelettes présentes dans le gaz à traiter 1, le distributeur 16 faisant office de séparateur gaz/ liquide ou comme déjà décrit de la condensation de vapeur durant la phase de régénération sur les parties plus froides situées à l'aval. La forme du fond support 21 favorise l'entrainement des liquides vers la partie centrale et le volume 18. Ces liquides sont purgés via la canalisation 19 et la vanne 20.

Le volume 18 et la canalisation 19 seront avantageusement isolés afin d'éviter une revaporisation des liquides 5. Ces liquides très concentrés seront avantageusement traités avant leur rejet ou utilisés éventuellement pour d'autres applications. Parmi ces dernières, on pourra citer les lavages de gaz plus efficaces avec des eaux à pH acide, ou par exemple le lavage du charbon ou des résidus de charbon après combustion pour en extraire les métaux (fer, arsenic, mercure, vanadium...) afin de valoriser ces constituants ou de les retirer préventivement du charbon. Ces condensats peuvent également servir de matière première à la fabrication d'acide. Les éléments internes de l'adsorbeur 10, tels que les grilles 14 et 15 et la canalisation 19 par exemple, sont conçus de manière à ce que leur dilatation thermique différentielle entre les étapes du cycle TSA (adsorption et régénération) ou entre les différents éléments à un moment donné du cycle ne conduisent pas à des déformations irréversibles mettant en péril le bon fonctionnement de l'installation de l'invention (perte d'étanchéité au gaz, épaisseur de la masse adsorbante significativement hétérogène...). Par exemple, la canalisation 19 peut avoir la forme d'une spire (non représenté sur la Figure 4).

La bride supérieure, le distributeur 16, la grille interne 15, la pièce de jonction entre la bride et la grille interne, le réservoir 18, le fond support 21, la canalisation 19 et éventuellement le corps de vanne 20 sont en acier inoxydable de type NAG (Nitric Acid Grade = qualité d'acier résistante à l'acide nitrique). La virole 11 et les fonds 12 et 13, la grille externe 14, l'enveloppe de la lame isolante sont en acier carbone.

## Revendications

1. Installation de purification par adsorption d'un flux gazeux de type TSA ou PSA comprenant au moins une impureté corrosive vis-à-vis de l'acier carbone, comprenant un adsorbeur radial comprenant :
- une virole avec une enveloppe externe en acier carbone ;
- une grille interne verticale et perforée en matériau résistant à la corrosion ;
- une grille externe verticale et perforée en acier carbone ;
- un adsorbant maintenu verticalement par la grille externe et la grille interne permettant d'arrêter au moins partiellement ladite impureté corrosive ;
- des moyens permettant une circulation centrifuge du flux gazeux ; et
- des moyens pour faire circuler le gaz de régénération de manière centripète.
- un moyen de recueillir et d'extraire les liquides de l'adsorbeur provenant du flux gazeux à purifier, et/ou formés pendant la régénération,
avec l'adsorbant maintenu verticalement et reposant sur un support présentant une pente dirigée vers l'axe central de l'adsorbeur et le moyen de recueillir les liquides.

2. Installation selon la revendication 1, **caractérisée en ce que** l'installation est de type TSA et les équipements de l'installation en contact avec le gaz de régénération en sortie d'adsorbeur sont en matériau résistant à la corrosion.

3. Installation selon la revendication 1, **caractérisée en ce que** l'installation est de type PSA et les équipements de l'installation en contact avec le gaz résiduaire sont en matériau résistant à la corrosion.

4. Installation selon l'une des revendications 1 à 3, **caractérisée en ce que** le matériau résistant à la corrosion est choisi parmi les aciers inoxydables, les métaux nobles, les polymères, les céramiques et l'acier carbone recouvert d'un matériau anticorrosion.

5. Installation selon l'une des revendications 1 à 4, **caractérisée en ce qu'**au moins un fond de l'adsorbeur est en acier carbone ; de préférence les 2 fonds de l'adsorbeur sont en acier carbone.

6. Installation selon l'une des revendications 1 à 5, **caractérisée en ce que** l'adsorbant maintenu verticalement est choisi parmi le gel de silice, le verre poreux, les résines, la silicalite, le charbon actif et la zéolite 3A.

7. Procédé de purification d'un flux gazeux comprenant au moins une impureté corrosive vis-à-vis de l'acier carbone, mettant en oeuvre une installation telle que définie dans l'une des revendications 1 à 6 et dans lequel l'impureté corrosive est choisie :
- dans le groupe des acides : HCl, HNO3, HF, et H2S04 ; ou
- dans le groupe des gaz : NOx, SOx et H2S en présence d'humidité.

8. Procédé selon la revendication 7, **caractérisé en ce que** le flux gazeux est un flux gazeux issu de combustion, de préférence d'oxy-combustion, ou issu de la métallurgie, de préférence des gaz de hauts fourneaux.

9. Procédé selon l'une des revendications 7 ou 8, **caractérisé en ce que** ledit procédé est une procédé de séchage ou de déballastage en CO2.

10. Procédé de purification d'un flux gazeux comprenant au moins une impureté corrosive vis-à-vis de l'acier carbone, mettant en oeuvre une installation telle que définie dans la revendication 1 et dans lequel l'impureté corrosive est choisie :
- dans le groupe des acides : HCl, HNO3, HF, et H2S04 ; ou
- dans le groupe des gaz : NOx, SOx et H2S en présence d'humidité ;
et les liquides extraits de l'adsorbeur sont recyclés dans des procédés de lavage à l'eau acide ou de production d'acide.

## Patentansprüche

1. Anlage zur Reinigung durch Adsorption einer gasförmigen Strömung vom Typ TSA oder PSA, umfassend mindestens eine Kohlenstoffstahl gegenüber korrosive Verunreinigung, umfassend einen Radialadsorber, umfassend:
- einen Mantel mit einem äußeren Hülle aus Kohlenstoffstahl;
- ein vertikales und perforiertes inneres Gitter aus korrosionsresistentem Material;
- ein vertikales und perforiertes äußeres Gitter aus Kohlenstoffstahl;
- ein vom äußeren Gitter und dem inneren Gitter vertikal gehaltenes Adsorptionsmittel, das es erlaubt, die korrosive Verunreinigung mindestens teilweise zu stoppen;
- Mittel, die ein zentrifugales Zirkulieren der gasförmigen Strömung erlauben; und
- Mittel, um das Regenerationsgas auf zentripetale Weise zirkulieren zu lassen;
- ein Mittel zum Gewinnen und zum Extrahieren der Flüssigkeiten aus dem Adsorber, die aus der zu reinigenden gasförmigen Strömung stammen und/oder während der Regeneration gebildet werden,
wobei das Adsorptionsmittel vertikal gehalten wird und auf einer Halterung ruht, die ein zur Mittelachse des Adsorbers und dem Mittel zum Gewinnen der Flüssigkeiten gerichtetes Gefälle aufweist.

2. Anlage nach Anspruch 1, **dadurch gekennzeichnet, dass** die Anlage vom Typ TSA ist und die Ausstattungen der Anlage, die mit dem Regenerationsgas am Ausgang des Adsorbers in Kontakt sind, aus korrosionsresistentem Material sind.

3. Anlage nach Anspruch 1, **dadurch gekennzeichnet, dass** die Anlage vom Typ PSA ist und die Ausstattungen der Anlage, die mit dem restlichen Gas in Kontakt sind, aus korrosionsresistentem Material sind.

4. Anlage nach einem der Ansprüche 1 bis 3, **dadurch gekennzeichnet, dass** das korrosionsresistente Material aus den nichtrostenden Stählen, den Edelmetallen, den Polymeren, den Keramiken und dem mit einem Antikorrosionsmaterial bedeckten Kohlenstoffstahl ausgewählt ist.

5. Anlage nach einem der Ansprüche 1 bis 4, **dadurch gekennzeichnet, dass** mindestens ein Boden des Adsorbers aus Kohlenstoffstahl ist; vorzugsweise sind die 2 Böden des Adsorbers aus Kohlenstoffstahl.

6. Anlage nach einem der Ansprüche 1 bis 5, **dadurch gekennzeichnet, dass** das vertikal gehaltene Adsorptionsmittel aus dem Kieselgel, dem porösen Glas, den Harzen, dem Silikalit, der Aktivkohle und dem Zeolith 3A ausgewählt ist.

7. Verfahren zur Reinigung einer gasförmigen Strömung, umfassend mindestens eine Kohlenstoffstahl gegenüber korrosive Verunreinigung, das eine Anlage nach einem der Ansprüche 1 bis 6 einsetzt und bei dem die korrosive Verunreinigung ausgewählt ist:
- aus der Gruppe der Säuren: HCl, HNO3, HF und H2SO4; oder
- aus der Gruppe der Gase: NOx, SOx und H2S bei Vorhandensein von Feuchtigkeit.

8. Verfahren nach Anspruch 7, **dadurch gekennzeichnet, dass** die gasförmige Strömung eine gasförmige Strömung ist, die aus Verbrennung, vorzugsweise aus Sauerstoffverbrennung stammt, oder aus der Metallurgie stammt, vorzugsweise Hochofengase.

9. Verfahren nach Anspruch 7 oder 8, **dadurch gekennzeichnet, dass** das Verfahren ein Trocknungs- oder CO2-Abwurfverfahren ist.

10. Verfahren zur Reinigung einer gasförmigen Strömung, umfassend mindestens eine Kohlenstoffstahl gegenüber korrosive Verunreinigung, das eine Anlage nach Anspruch 1 einsetzt und bei dem die korrosive Verunreinigung ausgewählt ist:
- aus der Gruppe der Säuren: HCl, HNO3, HF und H2SO4; oder
- aus der Gruppe der Gase: NOx, SOx und H2S bei Vorhandensein von Feuchtigkeit;
und die aus dem Adsorber extrahierten Flüssigkeiten in den Verfahren zum Waschen mit saurem Wasser oder zur Säureerzeugung recycelt werden.

## Claims

1. Installation for purification by adsorption of a gaseous stream of TSA or PSA type comprising at least one corrosive impurity regarding carbon steel, comprising a radial adsorber comprising:
- a ferrule with a carbon steel outer casing;
- a vertical and perforated inner gate made of material resistant to corrosion;
- a vertical and perforated outer gate made of carbon steel;
- an adsorbent held vertically by the outer gate and the inner gate making it possible to stop at least partially said corrosive impurity;
- means making it possible for a centrifugal circulation of the gaseous stream; and
- means for making the regeneration gas circulate centripetally;
- a means for collecting and extracting the liquids from the adsorber coming from the gaseous stream to be purified, and/or formed during the regeneration,
with the adsorbent held vertically and resting on a support having a slope directed towards the central axis of the adsorber and the means for collecting the liquids.

2. Installation according to claim 1, **characterised in that** the installation is of TSA type and the equipment of the installation in contact with the regeneration gas at the outlet of the adsorber is made of material resistant to corrosion.

3. Installation according to claim 1, **characterised in that** the installation is of PSA type and the equipment of the installation in contact with the residual gas is made of material resistant to corrosion.

4. Installation according to one of claims 1 to 3, **characterised in that** the material resistant to corrosion is selected from among stainless steels, noble metals, polymers, ceramics and carbon steel covered with an anticorrosion material.

5. Installation according to one of claims 1 to 4, **characterised in that** at least one bottom of the adsorber is made of carbon steel; preferably the 2 bottoms of the adsorber are made of carbon steel.

6. Installation according to one of claims 1 to 5, **characterised in that** the adsorbent held vertically is selected from among silica gel, porous glass, resins, silicalite, activated carbon and zeolite 3A.

7. Method for purifying a gaseous stream comprising at least one corrosive impurity regarding carbon steel, implementing an installation such as defined in one of claims 1 to 6, and wherein the corrosive impurity is selected:
- from the group of acids: HCI, HNO3, HF, and H2SO4; or
- from the group of gases: NOx, SOx and H2S in presence of humidity.

8. Method according to claim 7, **characterised in that** the gaseous stream is a gaseous stream coming from combustion, preferably oxy-combustion, or coming from metallurgy, preferably blast furnace gases.

9. Method according to one of claims 7 or 8, **characterised in that** said method is a drying or CO2 deballasting method.

10. Method for purifying a gaseous stream comprising at least one corrosive impurity regarding carbon steel, implementing an installation such as defined in claim 1 and wherein the corrosive impurity is selected:
- from the group of acids: HCI, HNO3, HF, and H2SO4; or
- from the group of gases: NOx, SOx and H2S in presence of humidity;
and the liquids extracted from the adsorber are recycled in the methods for washing with acid water or acid production.
